# EUROPEAN PATENT APPLICATION

(11) **EP 2 595 118 A2**
(43) Date of publication of application: **22.05.2013**
(21) Application number: 12193251.1
(22) Date of filing: 19.11.2012
(51) Int. Cl.: G06T 15/20, G06T 19/00, G06T 17/05, G01C 21/00

(54) **Methods for providing 3d building information**

(30) Priority: 18.11.2011 US 201161561345 P; 16.03.2012 GB 201204657
(71) Applicant: TomTom North America Inc., Lebanon, NH 03766 (US)
(72) Inventor: Menkov, Borislav L., Hanover, NH New Hampshire 03755 (US)
(74) Representative: Dobson, Adrian

(57) **Abstract**

A method of providing 3D building information for enhancing a digital map involves applying a lattice deformation to a 3D model of a building, and rendering an image of the deformed 3D model from an orthographic viewpoint. The steps of applying a lattice deformation to the 3D model and rendering an image of the deformed 3D model from an orthographic viewpoint provide a rendered image of the deformed 3D model that is an oblique projection of the building represented by the model. The 3D model is geo-positioned before lattice deformation. The resulting rendered image is superposed on a digital map.

## Description

The present invention relates to methods and systems for providing three dimensional (3D) building information which may be used in enhancing a digital map, and to methods and systems for enhancing digital maps with such information. The invention also extends to a server and mapping or navigation apparatus for carrying out various steps of the methods described herein.

It is becoming more commonplace to enhance digital maps with 3D building information. Such information may be utilised by map users in a number of ways. Providing some representation of the 3D properties of buildings may enable users to more readily identify actual physical locations after consulting a digital map. Another area in which 3D building information has been found to be particularly effective is in facilitating navigation. Recently, attention has turned to providing 3D building information to users of digital maps via mobile devices, such as navigation apparatus, to enable users to see a 3D view of the current surroundings as they travel.

Providing 3D building information on digital maps presents some challenges. One problem lies in providing a realistic 3D representation of a building without distortion of the underlying digital map. Certain prior art techniques involve providing a perspective projection of both the 3D building and its underlying map. However, the perspective view undesirably distorts the features of the underlying map, which is viewed at an angle to the horizontal. Other attempts which maintain an orthographic or "bird's eye" view of the map fail to provide realistic representations of the 3D buildings. For example, some arrangements work from a 2D digital map, and extrude building footprints upwards in order to create a 3D effect. As discussed in more detail below, such techniques, sometimes referred to as "2.5D", fail to provide a detailed representation of the building structure in the height dimension, e.g. details of the roofline. Increasingly it is desirable for the 3D enhanced digital maps to be made available via devices with more limited processing or graphics capability, such as mobile devices or navigation apparatus. The ability to provide such information via such devices presents further challenges.

Accordingly, the inventors have realised that there remains a need for improved methods for providing 3D building information for use in enhancing a digital map, which can be implemented without excessive computational power, and which can provide realistic 3D information without distortion of an underlying map.

In accordance with a first aspect of the invention there is provided a method for providing 3D building information for use in enhancing a digital map, the method comprising:
applying a lattice deformation to a 3D model of a building; and
rendering an image of the deformed 3D model from an orthographic viewpoint,
wherein the steps of applying a lattice deformation to the 3D model and rendering an image of the deformed 3D model from an orthographic viewpoint provide a rendered image of the deformed 3D model that is an oblique projection of the building represented by the model; and
wherein the rendered image of the deformed 3D model is a geo-positioned rendered image.

In accordance with the invention, a 3D model of a building is subjected to a lattice deformation. The deformed 3D model is then rendered from an orthographic viewpoint to obtain an image which is an oblique projection of the building represented by the model. The resulting image is geo-positioned. This can be achieved using a suitable geo-positioning operation at any stage in the process, or preferably, by providing an already geo-positioned 3D model as an input to the process. As the rendered image is geo-positioned, and is rendered from an orthographic viewpoint, it may be more readily associated with an orthographic digital map, with only minimal processing, e.g. scaling of the image to the map.

The combination of applying a lattice deformation to a 3D model of a building and then rendering this view from an orthographic viewpoint, has been found to result in an oblique projection which provides a realistic 3D appearance of the building, yet without the need to distort a digital map which it is used to enhance. Providing an oblique projection in this way, by the use of the lattice deformation of a 3D model and subsequent rendering of the deformed model from an orthographic viewpoint to obtain the oblique projection, may also be carried out without excessive computational power, e.g. in comparison to carrying out full perspective rendering of a building and underlying map. This makes the method suitable for implementation even by devices with limited computational power, e.g. mobile devices. The computational power may refer to the processor speed, graphic acceleration capability and/or data storage capacity. The methods of the present invention may be implemented "on the fly". The method may be implemented without requiring client software to have 3D rendering capability.

It will be appreciated that the method of the present invention may therefore address certain problems associated with prior art techniques. Unlike prior art methods which extrude building footprints upward to provide a 3D representation of a building, the present invention uses a 3D model which is then deformed and rendered to provide an oblique projection. Thus, the building may be accurately modelled in 3D, including features of the building in the height direction, and this 3D information is preserved when the model is deformed and rendered. In contrast, methods involving extrusion of a building footprint cannot accurately capture details in the height direction, e.g. at the roofline level. These methods typically assume the roof can be represented by a series of blocks at different heights, mirroring the shape of the base of the building.

It will be appreciated that the methods described herein are computer implemented. The steps of the method are preferably carried out automatically. Thus the method may be seen as a method for automatically providing 3D building information for use in enhancing a digital map.

The present invention extends to a system for carrying out the method in accordance with any of the aspects or embodiments of the invention described herein.

From a further aspect of the invention there is provided a system for providing 3D building information for use in enhancing a digital map, the system comprising:
means for applying a lattice deformation to a 3D model of a building; and
means for rendering an image of the deformed 3D model from an orthographic viewpoint,
wherein the applying a lattice deformation to the 3D model and rendering an image of the deformed 3D model from an orthographic viewpoint provide a rendered image of the deformed 3D model that is an oblique projection of the building represented by the model; and
wherein the rendered image of the deformed 3D model is a geo-positioned image.

The present invention in this further aspect may include any or all of the features described in relation to the other aspects of the invention to the extent they are not mutually inconsistent. The system may comprise means for carrying out the method in accordance with any of the aspects or embodiments of the invention described herein if not specifically stated, and, conversely, the methods may comprise carrying out any of the steps which the system comprises means for carrying out if not mentioned. The system may comprise a set of one or more processors for carrying out any of the operations mentioned. Thus, the term "means for" may be replaced by "a set of one or more processors for" carrying out any of the steps described. The same means or different means may be used for implementing any step. As will be described below, the system may advantageously be a distributed system in which some steps are carried out centrally, e.g. by a server, and other steps by a local apparatus, e.g. a navigation or mapping apparatus.

In accordance with the invention the rendered image of the deformed 3D model is a geo-positioned image. Preferably the 3D model is geo-positioned before rendering of the deformed model. The method may or may not extend to carrying out a geo-positioning operation. In some preferred embodiments the method comprises deforming and rendering an already geo-positioned 3D model, and the method comprises applying a lattice deformation to a geo-positioned 3D model of a building. For example, 3D models may be obtained from a database of 3D geo-positioned models. The geo-positioning information may advantageously be associated with a 3D model during creation of the model. However, the method may incorporate a geo-positioning step or steps at any stage in the process.

In embodiments in which the method comprises carrying out a geo-positioning operation to result in an image of the deformed 3D model that is geo-positioned, this may be carried out before or after rendering. Thus the geo-positioning operation may involve geo-positioning the 3D model or the rendered image. Preferably the method comprises geo-positioning the 3D model, i.e. before rendering an image of the model. In these preferred embodiments the steps of geo-positioning the 3D model of a building and applying a lattice deformation to the 3D model may be carried out in any order, and could be carried out simultaneously. Thus the step of geo-positioning the 3D model may be carried out before, during or after applying the lattice deformation to the 3D model, or combinations thereof.

In any of the embodiments in which geo-positioning occurs before rendering of an image of the model, whether this is achieved through a geo-positioning step, or by using an already geo-positioned model, as the method involves obtaining an oblique projection of the model by carrying out lattice deformation of the model and then rendering from an orthographic viewpoint, the geo-positioning information of the model may be correlated precisely to pixels of the subsequently rendered image. Preferably the 3D model of the building is geo-positioned before the step of applying the lattice deformation to the model. This has been found to be particularly advantageous in correlating the geo-positioning information of the model to the rendered image.

As used herein, the term "geo-positioning" takes on its usual meaning in the art. The step of geo-positioning the model or image associates the model or image with information allowing it to subsequently be positioned and oriented with respect to a digital map. Geo-positioning may be carried out using any suitable technique. In embodiments, the geo-positioned rendered image of the building is associated with position and orientation information. Thus, the method may comprise applying the lattice deformation to a 3D model associated with such information, or a step of geo-positioning may comprise associating the model or image with such information. The position information may comprise a set of geographic coordinates. The coordinates may be in two or more dimensions, e.g. including at least a longitude and latitude. The position information is preferably determined for an anchor point of the model or image. The orientation information associated with the model or image may indicate the orientation of the model or image relative to one, two or more cardinal directions.

The 3D model of the building that is lattice deformed may be of any suitable form. As discussed above, the model is preferably a geo-positioned model. The model may be of any desired level of detail. The model represents the 3D shape of the building. The model may include x, y and z data points. The model may be produced using a polygon modelling process. The model may be in the form of a wireframe model. The model is preferably in the form of a mesh, e.g. a polygonal mesh. The model may be stored as a vector mesh file.

The method may further comprise obtaining the 3D model of the building. The 3D building model may be obtained from any source. In embodiments the method further comprises the step of accessing data representative of the 3D model, and the system comprises means for accessing the data. Preferably the 3D model is a geo-positioned model, i.e. is associated with geo-positioning data, e.g. position and orientation data. The 3D model may be any suitable pre-existing 3D model. The method may comprise obtaining the model, e.g. from a database of stored models. However, in some embodiments, the step of obtaining the 3D model comprises creating the 3D model of the building. The model may be created manually or automatically, or combinations thereof. The system may comprise means for creating the 3D model. The step of creating the model may further comprise geo-positioning the model.

The method of the present invention involves the step of applying a lattice deformation to the 3D model of the building, and the system comprises means for so doing. In the process, the 3D model is the lattice object to which a lattice deformer is applied. The lattice deformer may be of any suitable type, and may be selected to provide a desired lattice deformation as described below. A lattice deformer refers to a non-renderable 3D grid of vertices that provides deformation capabilities to an object. The lattice deforms the lattice object according to its own shape.

The lattice deformation which is applied in accordance with the invention provides an oblique projection of the 3D model of the building once the deformed model has been rendered from the orthographic viewpoint. It is the combination of the deformation and rendering steps which provide the oblique projection. An oblique projection as used herein takes on its usual meaning in the art. A projection is a two dimensional representation of the 3D object, in this case the 3D model of the building.

The oblique projection may be of any suitable type. However, preferably the oblique projection is a cabinet projection or cavalier projection. These types of projection are well known forms of oblique projection. A cavalier projection is a form of oblique projection in which dimensions parallel to the third axis of the object, i.e. the receding axis, are shortened by one half. This may help compensate for distortion. A cabinet projection is an oblique projection in which all lines, including those parallel to the third axis of the object, i.e. receding lines, are given their true length.

The lattice deformation may be selected to provide an appropriate degree of deformation to the 3D model resulting in a given oblique projection thereof once rendered from the orthographic viewpoint. It will be appreciated that the oblique projection may be such that the receding axis defines any desired angle with the horizontal. Typically the angle defined by the receding axis with the horizontal in the oblique projection is 30 degrees or 45 degrees. In embodiments the method comprises applying a lattice deformation to result in the receding axis of the oblique projection of the model when rendered from the orthographic viewpoint defining a given angle with the horizontal, preferably in the range of from 20 to 50 degrees, or from 30 to 45 degrees, for example of 30 degrees or 45 degrees.

The lattice deformation angle may be chosen to result in a desired appearance of the building in the oblique projection produced after rendering. The value of this angle will determine the amount of the different faces of the model which is visible in the oblique projection. For example, for some buildings it may be preferable to show a greater proportion of one face than another, e.g. due to particular distinctive features of that face, or depending upon the position of a user relative to the building. The angle may be chosen specifically for a given building, such that if models of multiple buildings are deformed and rendered, different ones may be deformed and rendered using different lattice deformation angles. This will result in different portions of the facades of different buildings being visible. However, for visual consistency, typically sets of building models, e.g. building models associated with a given tile, will be deformed using the same lattice deformation angle.

The step of applying a lattice deformation to the model may comprise one or more steps. In some embodiments a plurality of lattice deformation steps may be applied to the same 3D model. This may enable a plurality of images to be rendered, each being an orthographic rendered image that is an oblique projection of the building represented by the model, and each being geo-positioned. In other words the method may comprise performing the lattice deformation and image rendering steps a plurality of times for the same 3D model. Reference to "the" rendered image herein may refer to the or each rendered image of the model. Multiple images may be useful in conjunction with arrangements where a digital map may be used in multiple orientations. A plurality of images may be rendered for enhancing the map in respect of a plurality of different map orientations.

After the lattice deformation is applied to the 3D model, an image of the deformed model is rendered from an orthographic viewpoint. The term "render" used herein takes on its usual meaning in the art, and refers to the process of (automatically) converting the deformed 3D model obtained through the lattice deformation step into a 2D image. The process converts the deformed 3D model in "world space" to a 2D image for display in "screen space". In accordance with the invention the 2D image is an oblique projection of the model. The process is one of 3D rendering. The model is rendered using an orthographic camera. In other words, the resulting rendered image is an orthographic projection of the deformed model to a viewing surface. By using an orthographic viewpoint when rendering the deformed model, the shape and scale of the model may be more accurately preserved. Lines which are parallel in space will appear parallel in the rendered image. This is in contrast to the use of a perspective projection for rendering an image. By using an orthographic rendering of the model, the resulting image may be simply superposed on an orthographic map, avoiding the need to distort the map by creating any perspective projection of the map. The deformed model is rendered only from the orthographic viewpoint.

In preferred embodiments the deformed 3D model is geo-positioned before rendering. In embodiments a reference point of a camera field used in rendering, e.g. the centre point thereof, is aligned with a known geo-location in the space of the 3D deformed model. For example, the camera may be centred over an origin of the model. It will be appreciated that the geo-positioning information preferably associated with the model before rendering may be correlated to a pixel of the rendered image of the model. This is due to the geo-positioning information being preserved during the orthographic rendering of the model, and preferably during lattice deformation of the model when the model is geo-positioned before deformation.

The step of rendering may further comprise applying one or more textures to the image, illuminating the image, etc, and any other steps to create a desired image as known in the art. In preferred embodiments the step of rendering the image of the model comprises photo-realistically rendering the image.

The method of the present invention provides a geo-positioned orthographic rendered image which is an oblique projection of the 3D building model. This rendered image may be used to enhance a digital map, being already geo-positioned. As the image is rendered from an orthographic viewpoint, it may be easily associated with an orthographic digital map without distortion of the map.

In some embodiments the method comprises storing data representative of the rendered image, e.g. in a database. As will be discussed in more detail below the data may then be accessed when required, and in embodiments, by another apparatus, for use in enhancing a digital map. In some embodiments the image data is stored by a central server. The central server may additionally carry out the steps resulting in the image, e.g. lattice deformation and rendering, and optionally geo-positioning. The stored image or, in other words, data representative thereof, may then be accessed by a local apparatus, e.g. a local mapping or navigation apparatus for use in enhancing a digital map. However, the lesser computational power required to implement methods in accordance with the invention mean that the deformation and rendering steps to obtain the rendered image may be carried out on the fly, e.g. by a server upon demand by a mapping or navigation apparatus, and may be rendered as required for enhancing a digital map, rather than being rendered in advance. The server may then store 3D, preferably geo-positioned, models for rendering, rather than already rendered images of the models. The geo-positioning information associated with the 3D models may enable the server to select models to be rendered for association with a given part of a digital map.

The present invention extends to the use of the rendered image to enhance a digital map. In embodiments the method further comprises using the rendered image to enhance a digital map. Preferably the step comprises associating the rendered image with a digital map. References to associating an image with a digital map may be understood as referring to associating data representative of the image with data representative of a digital map. References herein to the "digital map" may be understood to refer to any type of digital map, although preferably the map is an orthographic digital map. The orthographic digital map may be north-up type map. The step of associating the image with a digital map may comprise associating data representative of the rendered image with digital map data. This may be carried out using geo-positioning information associated with the image.

It is envisaged that the step of associating the image with a digital map could be carried out by associating the 3D model with the digital map before rendering of the image of the 3D model, either before or after lattice deformation. In these embodiments the model would need to be geo-positioned before being associated with the digital map. In some embodiments the image of the 3D model may be rendered with the model already associated with, e.g. superposed on, an orthographic digital map. As the map is not distorted during the rendering stage, due to the orthographic viewpoint used, the resulting image of the model would retain its positioning with respect to the digital map.

In preferred embodiments, however, the image of the 3D model is associated with a digital map after rendering of the image, i.e. only after rendering of the image. The image is not rendered on or together with a digital map. This has the advantage that the deformation and rendering steps may be carried out separately from the steps of associating the model with a map. As the method of the present invention results in a geo-positioned orthographic rendered image of the building model, the method facilitates such a division of the steps, providing pre-rendered geo-positioned images which can be readily associated with an orthographic digital map in a final stage of the process.

The steps of the present invention may be carried out in various different manners, which may or may not involve the use of a distributed system. In distributed implementations any of the steps may be carried out by a central server or by a local apparatus, and the system may comprise a central server and local apparatus, e.g. navigation or mapping apparatus arranged to perform certain steps. The present invention allows 3D building data to be displayed by apparatus which do not have full 3D image display or rendering capabilities, as the image is a 2D projection of the building.

As mentioned above, data representative of a rendered geo-positioned image of the building may be determined by a central server, and provided as required to a (local) navigation or mapping apparatus, either associated with a digital map, or not being associated with a map, with the mapping or navigation apparatus carrying out the association with a digital map which may be stored by the apparatus. For example, images may be downloaded with or without digital map data on the fly in respect of a region of a digital map that is to be displayed. Thus, the step of associating the image with a digital map may be carried out by a separate apparatus enabling the method to be implemented via a distributed system. In preferred embodiments the method may comprise providing the rendered geo-positioned image of the model, and subsequently associating the image with a digital map in a separate operation, e.g. at a different time and place.

Where the images are rendered by a central server, the images may be rendered in advance and stored in a database for subsequent use, such as a database of a central server. However, in other embodiments the server may render images upon demand by a mapping or navigation apparatus. For example, the mapping or navigation apparatus may provide information regarding a digital map for which 3D building information is required to the server, and the server may then carry out the steps required to obtain one or more rendered images representative of buildings and provide the rendered image data to the mapping or navigation apparatus. This may be carried out for a part of a digital map including a planned or probable route, with the navigation or mapping apparatus providing information to the server indicative of the geographic extent of the part of the digital map, and the server using the information to obtain geo-positioned 3D models for rendering, e.g. from a database of such models, which are to be associated with the part of the digital map. This may be achieved by reference to the geo-positioning information associated with the models.

Whether or not rendering is carried out on the fly, the steps involved in providing the rendered geo-positioned image of the model are preferably carried out by a (central) server, and the system comprises a central server arranged to carry out these steps. This includes the steps of deforming the 3D model, rendering an image of the model, and optionally geo-positioning the model or image in accordance with any of the embodiments described above. The method may then comprise a local navigation or mapping apparatus obtaining data representing the rendered image from the central server, and the system may comprise a mapping or navigation apparatus so arranged. The server may or may not store the rendered image before being provided to a mapping or navigation apparatus. The server may provide the image data to a mapping or navigation apparatus in any manner, e.g. upon request of a mapping or navigation apparatus. It is envisaged that the local apparatus could store the 3D model of a building and provide this to the server for processing to obtain an image thereof. However, in preferred embodiments the 3D model is stored by the server or otherwise obtained by the server.

In embodiments using a server, the server may or may not carry out the step of enhancing a map with the image, e.g. associating the image with a digital map. Thus, the server may provide the image already associated with digital map data to a navigation or mapping apparatus, or may provide the image not associated with digital map data to the apparatus. In preferred embodiments the step of enhancing the map with the image or associating the image with a digital map is carried out by the local navigation or mapping apparatus. In embodiments the navigation or mapping apparatus of the method or system comprises a set of one or more processors arranged to access digital map data for display by the apparatus, the set of one or more processors being arranged to obtain the rendered image data for association with the digital map data from a remote server. The apparatus may be arranged to store the digital map data in a memory thereof, or may obtain the digital map data from another source such as the central server. The apparatus may obtain the image data relating to a part of a digital map to be displayed in connection with a planned or probable route, etc. In other arrangements, the local apparatus may be arranged to obtain both the digital map data and associated rendered image data from a central server. In these embodiments the server may perform the step of enhancing the digital map with the image data, i.e. associating the image data with the digital map data. Whether association of the digital map data and rendered image data is carried out by a server or local apparatus, in embodiments this step may be carried out on the fly. The step of rendering the images may also be carried out on the fly. Where the apparatus obtains the rendered image data from a central server, the method may comprise the apparatus providing the server with information indicative of a geographical extent of a part of a digital map for which rendered image data is required. This may allow the server to obtain the relevant 3D models for rendering using geo-positioning data of the models, e.g. from a database of models. In any of the aspects or embodiments of the invention herein wherein a navigation or mapping apparatus accesses digital map data, this may or may not be stored by the apparatus. It may be obtained from any source when not stored by the apparatus, e.g. another server, the server that may perform rendering etc.

In accordance with a further aspect of the invention there is provided a method for enhancing a digital map with 3D building information, the method comprising a server:
applying a lattice deformation to a 3D model of a building; and
rendering an image of the deformed 3D model from an orthographic viewpoint,
wherein the steps of applying a lattice deformation to the 3D model and rendering an image of the deformed 3D model from an orthographic viewpoint provide a rendered image of the deformed 3D model that is an oblique projection of the building represented by the model, and
wherein the rendered image of the deformed 3D model is a geo-positioned image,
the method further comprising a navigation or mapping apparatus:
   obtaining the data representative of the rendered image from the server, and using the data to enhance a digital map.

The method preferably involves the navigation or mapping apparatus associating the received image data with digital map data accessible to the apparatus, most preferably stored by the apparatus. In some embodiments the central server carries out the steps of applying the lattice deformation to the 3D model of a building and rendering an image thereof in response to a request by the local navigation or mapping apparatus. The server may access data representative of a geo-positioned 3D model for rendering, e.g. from a database which may or may not be stored by the server. The mapping or navigation apparatus may provide information regarding a geographic extent of a part of a digital map for which 3D building information is required, with the server selecting 3D models for rendering using this information. The server may or may not comprise means for storing the geo-positioned image.

In accordance with a further aspect of the invention there is provided a system for enhancing a digital map with 3D building information, the system comprising a server comprising:
means for applying a lattice deformation to a 3D model of a building; and
means for rendering an image of the deformed 3D model from an orthographic viewpoint,
wherein the steps of applying a lattice deformation to the 3D model and rendering an image of the deformed 3D model from an orthographic viewpoint provide a rendered image of the deformed 3D model that is an oblique projection of the building represented by the model, and
wherein the rendered image of the deformed 3D model is a geo-positioned image,
the system further comprising a local navigation or mapping apparatus comprising:
   means for obtaining the data representative of the rendered image from the server, and using the data to enhance a digital map.

The navigation or mapping apparatus may be arranged to associate the received image data with digital map data accessible to the apparatus, most preferably stored by the apparatus.

The present invention further extends to a method of providing 3D building information for use in enhancing a digital map, the method comprising a server:
applying a lattice deformation to a 3D model of a building; and
rendering an image of the deformed 3D model from an orthographic viewpoint,
wherein the steps of applying a lattice deformation to the 3D model and rendering an image of the deformed 3D model from an orthographic viewpoint provide a rendered image of the deformed 3D model that is an oblique projection of the building represented by the model, and
wherein the rendered image of the deformed 3D model is a geo-positioned rendered image.

In accordance with a further aspect the present invention provides a server, wherein the server comprises:
means for applying a lattice deformation to a 3D model of a building; and
means for rendering an image of the deformed 3D model from an orthographic viewpoint,
wherein the steps of applying a lattice deformation to the 3D model and rendering an image of the deformed 3D model from an orthographic viewpoint provide a rendered image of the deformed 3D model that is an oblique projection of the building represented by the model, and
wherein the rendered image of the deformed 3D model is a geo-positioned rendered image.

In accordance with another aspect the present invention provides a method of operating a mapping or navigation apparatus, the method comprising configuring the apparatus to access digital map data and cause a digital map to be displayed using the data, optionally wherein the apparatus stores the digital map data, the method further comprising causing the apparatus to obtain from a remote server data representing a geo-positioned orthographic rendered image that is an oblique projection of 3D model representing a building, the rendered image having been produced by applying a lattice deformation to a 3D model of the building and rendering an image of the deformed 3D model from an orthographic viewpoint, to associate the image data with the digital map data; and to display the rendered image superposed on the digital map.

In accordance with yet another aspect the present invention provides a mapping or navigation apparatus, comprising a display, a memory, and a set of one or more processors, the set of one or more processors being configured to:
access digital map data and to cause a digital map to be displayed using the digital map data, optionally wherein the digital map data is stored by the memory;
obtain from a remote server data representing a geo-positioned orthographic rendered image that is an oblique projection of a 3D model representing a building, the rendered image having been produced by applying a lattice deformation to a 3D model of the building and rendering an image of the deformed 3D model from an orthographic viewpoint;
associate the image data with the digital map data; and
cause the rendered image to be displayed superposed on the digital map.

The present invention in accordance with any of these further aspects may comprise any or all of the steps described in relation to the other aspects of the invention to the extent they are not inconsistent therewith.

Of course, in some arrangements the steps of obtaining the rendered image, i.e. lattice deformation, rendering and preferably geo-positioning, may be carried out by a local mapping or navigation apparatus, which may then use the image to enhance a digital map. This is made possible due to the reduced computational power required to implement rendering of 3D models in accordance with the invention, through the use of the lattice deformation step. The present invention extends to a mapping or navigation apparatus arranged to perform the steps of the method in accordance with the invention. In some embodiments the system may be a mapping or navigation apparatus. The apparatus may carry out these steps on the fly.

Regardless of where or when the step of enhancing the digital map, e.g. associating the image with a digital map is performed, the step preferably comprises superposing the image on the digital map. Thus the 2D image of the 3D model is superposed on the 2D digital map. The previous geo-positioning of the image, e.g. the association of geo-positioning information therewith, enables the rendered image to readily be located on the digital map. For example, a position of an origin of the model which is preserved in the rendered image may be correlated to the relevant position in the map.

In embodiments the method may further comprise scaling the rendered image to the digital map. This may be carried out before or simultaneously with the step of superposing the image on the map. Preferably the scaling of the rendered image is carried out before it is superposed on the digital map. In some embodiments this step may be carried out by a server before providing the rendered image to a mapping or navigation apparatus. The method may comprise the mapping or navigation apparatus providing data relating to a map scale of a digital map which the image is to enhance. However, in other embodiments the scaling step may be carried out by the mapping or navigation apparatus. Wherever the scaling step is performed, in embodiments the method comprises determining a scale of the rendered image, and correlating the scale of the image to a scale of the digital map. This may be done by applying a corrective coefficient to match the two scales. In embodiments the method therefore comprises matching a scale of the rendered image to the map scale.

In preferred embodiments the step of superposing the rendered image on the digital map comprises superposing the rendered image on a background being the digital map. In preferred embodiments the deformed 3D model is rendered on a transparent background. The step of superposing the rendered image on the orthographic digital map may comprise replacing the transparent background with the digital map. In preferred embodiments in which the rendered image is associated with geo-positioning information and is scaled to the map scale before being superposed on the orthographic digital map, the superposing step is a simple matter of applying the digital map to be the background of the rendered image.

In accordance with any of its aspects or embodiments the method preferably comprises displaying the rendered image superposed on a digital map, and the system comprises means for so doing. The method or system may comprise a mapping or navigation apparatus carrying out or for carrying out the step of displaying the rendered image. The navigation or mapping apparatus may comprise a display for displaying a digital map to a user; and a set of one or more processors configured to access digital map data and to cause the digital map to be displayed on the display, the set of one or more processors further being configured to access data representative of the rendered image and to cause the rendered image to be displayed superposed on the digital map. As discussed above, the rendered image data may be obtained from another source, e.g. from a remote server, or may be derived and stored by the local apparatus.

In embodiments the rendered image is specific to a given orientation of a digital map. As described above, in some embodiments a set of images of a given 3D model may be obtained for use with different respective map orientations. In these embodiments the appropriate image for a given orientation may be used, or a set may be obtained, e.g. by a mapping or navigation apparatus for use with multiple possible map orientations.

It will be appreciated that the methods described herein may be carried out for any number of building models. The present invention lends itself to the automatic processing of larger datasets. Thus the method may comprise carrying out any of the steps described above for obtaining the rendered image in relation to at least one 3D model of a building to obtain an orthographic rendered image that is an oblique projection of the model, and preferably in relation to a plurality of such 3D models to obtain a plurality of orthographic geo-positioned rendered images that are respectively oblique projections of each model. Where images of multiple models are to be obtained, this may be done in any suitable manner. In embodiments each model is processed separately, i.e. the steps of carrying out a lattice deformation of a model and then imaging the model are carried out in respect of one model, and then another model, etc. This may allow different lattice deformations to be applied to different models, e.g. to show differing amounts of different facades of different buildings.

In embodiments the method comprises, for a plurality of 3D models, carrying out the steps of applying a lattice deformation to the model and rendering the deformed model from an orthographic viewpoint to obtain an image that is an oblique projection of the building represented by the model, and which image is geo-positioned, to obtain a set of a plurality of geo-positioned rendered images which are oblique projections of each of a plurality of buildings represented by the models. The steps may be in accordance with the method of any of its embodiments described herein. The method may comprise storing data representative of the set of images, e.g. in a database. The system of the present invention may comprise such a database. In these embodiments the stored images provide a set of pre-rendered geo-positioned oblique projections of the buildings which can be used to enhance a digital map. The method may comprise accessing the database and using the images to enhance a digital map. In embodiments the method comprises accessing the data representative of the images and associating one or more of the images with an orthographic digital map.

The set of buildings represented by the set of rendered images in accordance with the invention may be selected as desired. It is an established technique to represent digital map information on a tile-by-tile basis, as one or more tiles, each representing some or all of the map to be displayed. Such tile-based map rendering is an efficient and powerful way for displaying map information in both two and three dimensions. Tile-based rendering may facilitate rendering by apparatus with limited computational power, such as mobile devices or navigation devices. In preferred embodiments the set of images represent a set of buildings to be associated with a given tile of a tile-based digital map. The method may be repeated for different tiles to result in sets of rendered images representing buildings associated with each of a plurality of different tiles. For example, where a server renders images for a navigation or mapping apparatus on the fly, this may be carried out for groups of buildings associated with a given tile of the digital map, such that rendering occurs on a tile by tile basis. The set of images for a tile may be provided as a group or separately to the apparatus. In any of its aspects or embodiments, the method may further comprise associating the rendered image or each set of rendered images with a tile or tiles of a tile based orthographic digital map. In embodiments in which data representative of the images is stored in a database, the method may comprise accessing the data and associating one or more of the images with an orthographic digital map.

In accordance with a further aspect of the invention there is provided a database storing data representative of a set of geo-positioned orthographic rendered images of 3D models of buildings for use in enhancing a digital map, wherein each image is an oblique projection of the building represented by the model, the rendered image having been produced by applying a lattice deformation to a 3D model of the building and rendering an image of the deformed 3D model from an orthographic viewpoint, preferably wherein the oblique projection is a cavalier or cabinet projection of the building.

Preferably the set of images are of 3D models of buildings which are to be associated with a given tile of a tile-based digital map. In embodiments the database may store a plurality of such sets of images for each of a plurality of tiles of the map. In embodiments the method comprises accessing the database and associating a set of images with a given tile of an orthographic digital map.

The present invention in this further aspect may include any or all of the features described in respect to the other aspects of the invention to the extent they are not mutually inconsistent.

The mapping or navigation apparatus referred to herein may be any form of mapping or navigation apparatus. In preferred embodiments the apparatus is a mobile apparatus. The present invention is particularly useful in enabling such devices, which may typically have limited computational power, to display 3D building information. A mapping apparatus may not have route planning functionality and may or may not have the capability to obtain position data relating to the position of the apparatus. In some embodiments, the mapping or navigation apparatus may be implemented by means of an application of a processing device which does not form part of a specific mapping or navigation device. For example the invention may be implemented using a suitable computer system arranged to execute mapping or navigation software. The system may be a mobile or portable computer system e.g. a mobile telephone or laptop, or may be a desktop system.

In some preferred embodiments the mapping or navigation apparatus is a mobile telecommunications apparatus or a portable navigation device (PND). The PND may, and preferably does, include one or more other features typical of PNDs, such as, and preferably, an input interface configured to enable a user to interact with and/or control the apparatus and/or device. The invention is also applicable to navigation apparatus which is provided as part of an integrated navigation system. For example the apparatus may form part of an in-vehicle integrated navigation system.

In some embodiments the mapping or navigation apparatus may comprise a set of one or more processors, and a memory. The processor and memory cooperate to provide an execution environment in which a software operating system may be established. One or more additional software programs may be provided to enable the functionality of the apparatus to be controlled, and to provide various other functions. A navigation apparatus of the invention may preferably include GPS (Global Positioning System) signal reception and processing functionality. The apparatus may comprise one or more output interfaces by means of which information may be relayed to the user. The output interface(s) may include a speaker for audible output in addition to the visual display. The apparatus may comprise input interfaces including one or more physical buttons to control on/off operation or other features of the apparatus.

For the avoidance of doubt, the present invention in accordance with any aspect thereof may include any or all of the features described in relation to any other aspect of the invention to the extent they are not mutually inconsistent.

The methods in accordance with the present invention may be implemented at least partially using software, e.g. computer programs. The present invention thus also extends to a computer program comprising computer readable instructions executable to perform a method according to any of the aspects or embodiments of the invention.

The invention correspondingly extends to a computer software carrier comprising such software which when used to operate a system or apparatus comprising data processing means causes in conjunction with said data processing means said apparatus or system to carry out the steps of the methods of the present invention. Such a computer software carrier could be a non-transitory physical storage medium such as a ROM chip, CD ROM or disk, or could be a signal such as an electronic signal over wires, an optical signal or a radio signal such as to a satellite or the like.

References to storing, e.g. an image or digital map, or associating an image and digital map, etc may be understood to refer to carrying out such acts in relation to data representative of the image or digital map, etc, and may be replaced with such references.

Advantages of these embodiments are set out hereafter, and further details and features of each of these embodiments are defined in the accompanying dependent claims and elsewhere in the following detailed description.

Some preferred embodiments of the invention will now be described by way of example only, and with reference to the accompanying drawings of which:
Figure 1 is flow diagram illustrating the steps of a method for obtaining 3D building information in accordance with a preferred embodiment;
Figure 2 is an example of a lattice deformation;
Figures 3A and 3B illustrate examples of cavalier projections;
Figures 4A and 4B illustrate examples of cabinet projections;
Figure 5 illustrates an example of a geo-positioned 3D model;
Figure 6 illustrates the 3D model of Figure 5 once a lattice deformation has been applied;
Figure 7 shows an rendered image of the deformed model of Figure 6;
Figure 8 shows the rendered image of Figure 7 when superposed on a digital map;
Figure 9 shows a first exemplary area of a digital map enhanced with 3D building information; and
Figure 10 shows a second exemplary area of a digital map enhanced with 3D building information.

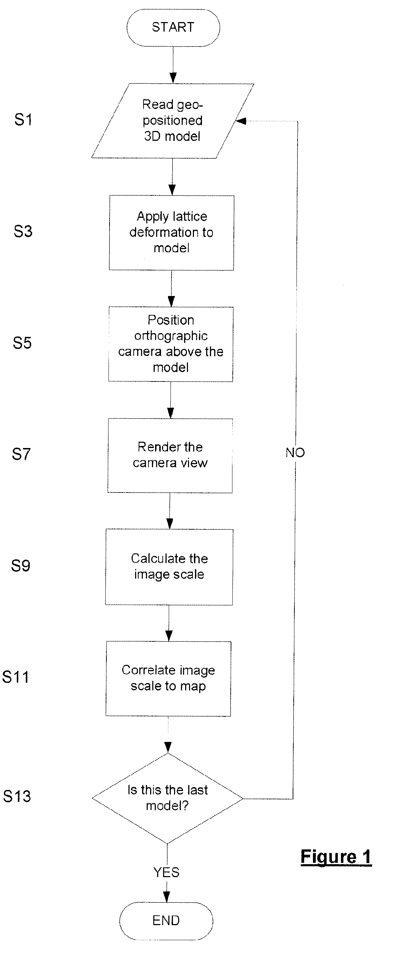

Figure 1 is a flow diagram illustrating the steps of a method for obtaining 3D building information which may be used to enhance a digital map in accordance with one preferred embodiment of the invention. In this illustrative example, the steps described by reference to Figure 1 are performed by a server on the fly, for use by a local mobile navigation device to enhance a digital map. In this example, the navigation device has requested that the server provide 3D building information to be superposed on a digital map which it is displaying. The device has provided information regarding the scale of the map to the server, and the geographic region involved. This may be a tile of the digital map. However, as discussed below, it is not essential that the method is implemented by such a distributed method, and other arrangements are possible.

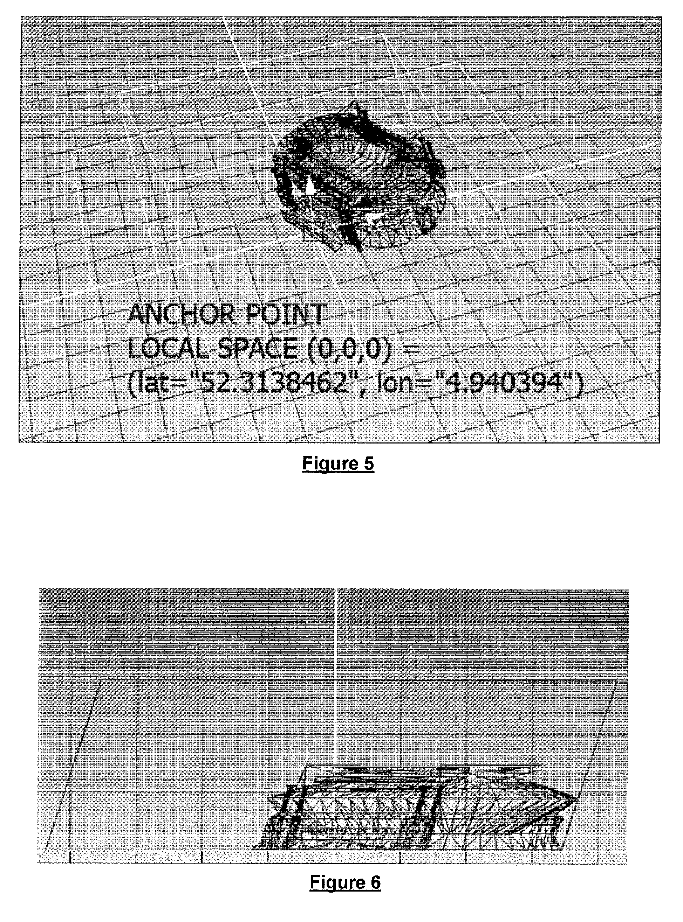

Referring to Figure 1, in step S1, the server reads a geo-positioned 3D model of a building from a database of such models. The model is one which the server has determined is required to be associated with a given portion, e.g. tile of a digital map that the navigation device is to display. The model has already been geo-positioned and is associated with position and orientation information. The steps of the method described may be performed by a set of one or more processors of the server. The geo-positioned 3D model is shown in Figure 5. The geographic coordinates of an anchor point (0,0,0) in local space are known, being lat = "52.3138462", lon = "4.940394", as is the orientation of the cardinal directions (positive X is East, and positive Y is North in this example).

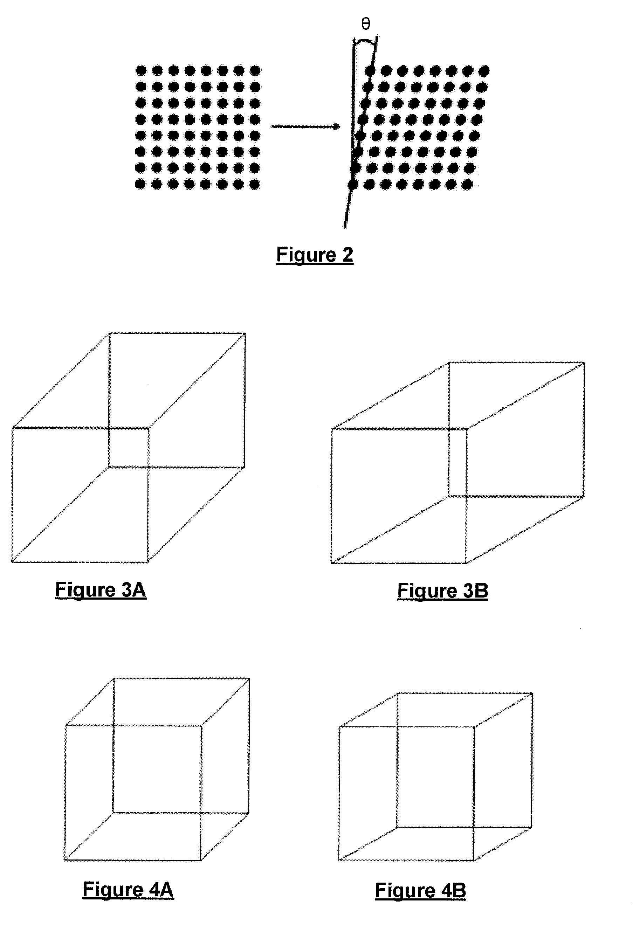

In step S3, the processor applies a lattice deformation to the model. The model is the object of a lattice deformer. The lattice deformation step is illustrated in Figure 6, which shows a side view of the deformed geometry. The lattice deformation angle is chosen to result in a desired proportion of the facade of the building being visible in the rendered image as will be discussed below. Figure 3 illustrates a pure lattice deformation, illustrating the shape of an object before and after deformation. As known in the art, the lattice deformer deforms a lattice object in accordance with a shape of the deformer. The lattice deformation angle is marked θ in Figure 2.

In step S5, the deformed model is rendered from an orthographic viewpoint to obtain an orthographic rendered image. The orthographic camera does not provide any perspective deformation, and is centred above the (0,0,0) point in local space. This enables a middle point of the camera field to be correlated with a known geo-location.

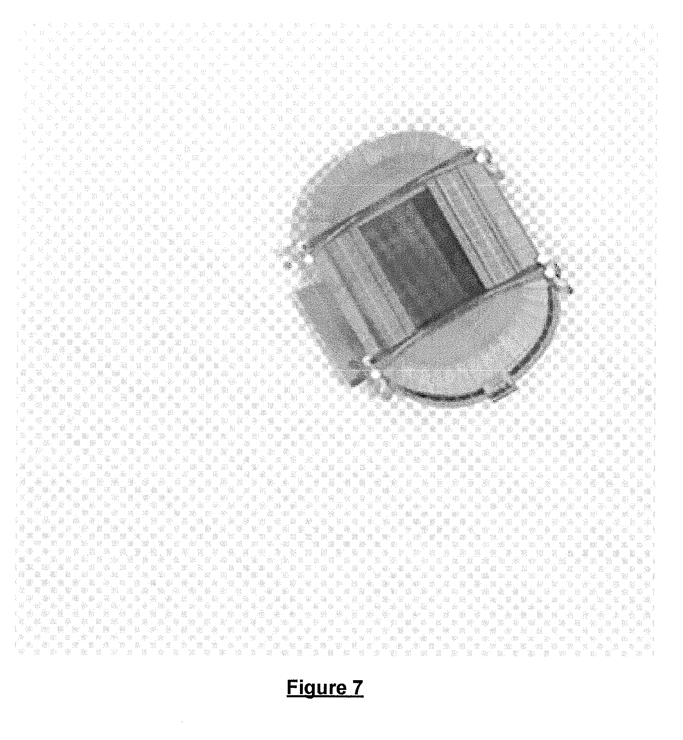

In step S7 the view from the camera is rendered. This is done on a transparent background, and at a preset resolution. Figure 7 illustrates the rendered image.

In step S9, the server determines an image scale, e.g. in pixels per foot.

In step S11, the image scale is correlated to a map scale. In this example, the map scale is a scale of a map to be displayed by a mobile navigation device. The device has sent the scale information to the server, to enable the server to provide a rendered image of the desired scale. In other arrangements, scaling may be carried out by the navigation device once the server sends the image to it. The scaling step involves taking a correlation between the image scale and the map scale, and applying a corrective coefficient to match the two scales.

After step S11, the processor determines whether any further buildings need to have images rendered - step S13. In one exemplary method all buildings for which 3D information is desired and which are associated with a given tile of a tile based digital map are rendered as described above. If so, the steps S1-S11 are repeated. If not, the process is terminated. Image data for each image that has been rendered is provided to the mobile navigation device. In the tile based embodiment this would be image data for the set of buildings associated with one tile. The method may be repeated for each further tile as this is required by the mobile device in this on the fly method.

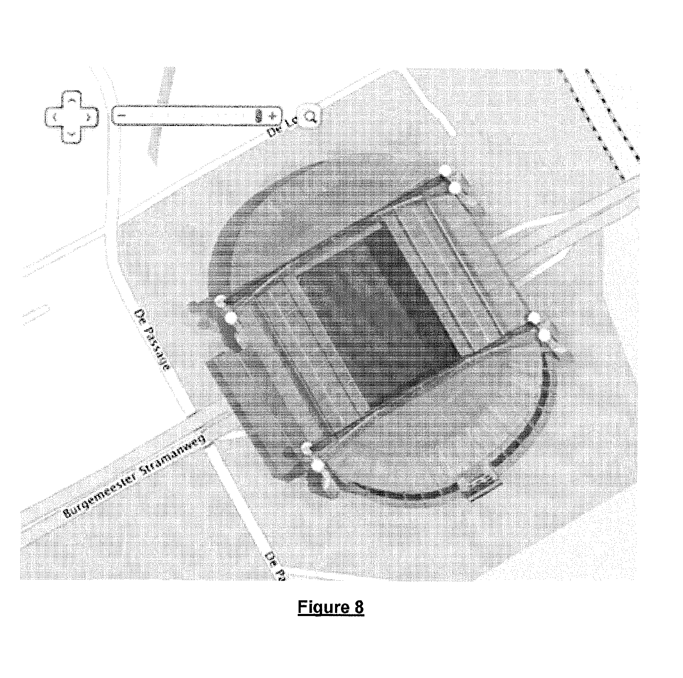

On receiving the image data for an image, the navigation device superposes the image on the digital map. This may be done simply using the geo-positioning data, or, if not already done, additionally with a scaling operation as described above. Figure 8 illustrates the image when superposed on the digital map, and as it may be displayed to a user.

In some cases, the mobile navigation device may allow the map to be rotated on screen. In this case, a set of images of the model may be provided, obtained by different lattice deformation steps, to provide the relevant set of oblique projections of the model once rendered. This may be achieved by repeating steps S3-S13 for each desired image of the model. For visual consistency the same lattice deformation may be applied for each building.

The result of the lattice deformation and rendering steps is an image that is an oblique projection of the building. By way of background, two common types of oblique projection are illustrated in Figures 3A, 3B, 4A and 4B. Figures 3A and 3B illustrate cavalier projections, while Figures 4A and 4B illustrate cabinet projections. It is particularly preferred that the oblique projection obtained in accordance with the invention is one of these types of projection.

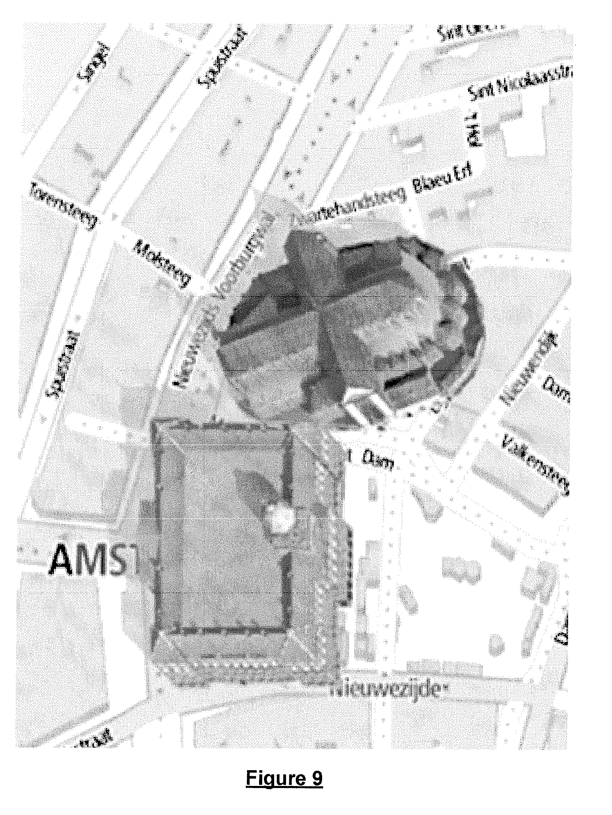

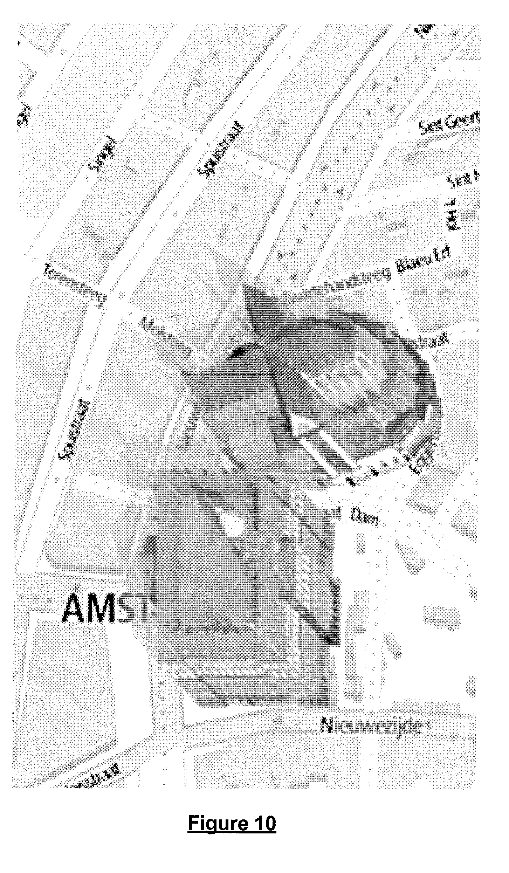

Figures 9 and 10 illustrate an area of a digital map on which rendered images of certain landmarks have been superposed. Figure 9 illustrates the appearance of the enhanced map when a lattice deformation of 20 degrees was used in preparing the images, while Figure 10 illustrates the result of using a larger lattice deformation angle of 40 degrees. These Figures illustrate the way in which the lattice deformation angle may be controlled as desired to result in a given amount of a building facade being visible in the projection.

It will be appreciated that various alternative implementations are possible. The method will still involve the steps S1-S13, and the superposing of the resulting image on an orthographic map, but where these steps are performed may vary. For example, a mapping or navigation apparatus e.g. a mobile navigation device may carry out all of the steps, including the lattice deforming and rendering steps. In other arrangements, a server may carry out the superimposing step, providing the digital map data and image data associated therewith to a local mapping or navigation apparatus. While the method of Figure 1 has been described as an on the fly type method, this is not essential, and sets of rendered images may be stored in a database. This would provide sets of pre-rendered orthographic images of oblique projections of buildings which can be retrieved from a database as required, e.g. by a navigation apparatus.

The present invention has been found to provide more economic display of 3D data, particularly on mobile devices, e.g. mobile navigation devices such as PNDs, or navigation devices implemented using mobile phones etc, which may have lesser computational capability. The method allows relatively larger datasets to be automatically processed. Furthermore, the resulting images promote building recognition, and provide the ability to customise the angle of deformation to allow differing amounts of the building facade to be displayed, while retaining precise geo-positioning of the images. The orthographic rendering of the images allows them to be superposed on an orthographic digital map without distortion of the map. As the images are based on 3D models, they may capture precise shape information in each dimension, including the height dimension.

## Claims

1. A method of enhancing a digital map with 3D building information for display on a mapping or navigation apparatus, the method comprising:
accessing digital map data associated with a geographic region to provide an orthographic digital map of the region for display;
obtaining at least one orthographic rendered image that is an oblique projection of a 3D model representing a building within the geographic region, wherein each image has associated geo-position information;
associating the at least one rendered image with the digital map using the geo-position information of the image; and
displaying the at least one rendered image superposed on the digital map.

2. The method of claim 1, wherein the oblique projection is a cabinet or cavalier projection.

3. The method of claim 1 or 2, wherein an angle between the receding axis and the horizontal in the oblique projection is between 20 to 50 degrees.

4. The method of any preceding claim, comprising matching a scale of the at least one rendered image to a scale of the digital map (S11, S13) before superposing the at least one rendered image on the digital map.

5. The method of any preceding claim, further comprising generating the at least one orthographic rendered image, said generating comprising:
obtaining the 3D model of the building within the geographic region (S1);
applying a lattice deformation to the 3D model to provide an oblique projection of the 3D model when rendered (S3); and
rendering an image of the deformed 3D model from an orthographic viewpoint (S5, S7).

6. The method of claim 5, wherein the image of the deformed 3D model is rendered on a transparent background.

7. The method of any preceding claim, wherein the at least one rendered image is obtained from a remote server.

8. The method of any preceding claim, wherein the mapping or navigation apparatus is a mobile apparatus.

9. A computer program product comprising computer readable instructions executable to perform a method according to any preceding claim, optionally embodied on a computer readable medium.

10. A mapping or navigation apparatus, comprising a display, a memory, and a set of one or more processors, the set of one or more processors being configured to:
access digital map data associated with a geographic region to provide an orthographic digital map of the region for display;
obtain at least one orthographic rendered image that is an oblique projection of a 3D model representing a building within the geographic region, wherein each image has associated geo-position information;
associate the at least one rendered image with the digital map using the geo-position information of the image; and
display the at least one rendered image superposed on the digital map on the display.

11. The mapping or navigation apparatus of claim 10, wherein the set of one or more processors is configured to obtain the at least one rendered image from a remote server.

12. The mapping or navigation apparatus of claim 9 or 10, wherein the mapping or navigation apparatus is a mobile apparatus, and wherein the digital map data is stored in the memory of the apparatus.

13. A system for enhancing a digital map with 3D building information for display on a mapping or navigation apparatus, comprising:
a server comprising a memory storing a database having a plurality of orthographic rendered images, wherein each image is an oblique projection of a 3D model representing a building, and wherein each image has associated geo-position information; and
a mapping or navigation apparatus comprising a display, a memory, and a set of one or more processors, the set of one or more processors being configured to:
access digital map data associated with a geographic region to provide an orthographic digital map of the region for display;
obtain from the server at least one orthographic rendered image of a building within the geographic region;
associate the at least one rendered image with the digital map using the geo-position information of the image; and
display the at least one rendered image superposed on the digital map on the display.

14. A method of generating orthographic rendered images with 3D building information for use in enhancing a digital map, the method comprising:
obtaining a 3D model of a building, each 3D model having associated geo-position information (S1);
applying a lattice deformation to the 3D model to provide an oblique projection of the 3D model when rendered (S3); and
rendering an image of the deformed 3D model from an orthographic viewpoint using the geo-position information of the 3D model (S5, S7).

15. An apparatus for generating orthographic rendered images with 3D building information for use in enhancing a digital map, comprising:
means for obtaining a 3D model of a building, each 3D model having associated geo-position information (S1);
means for applying a lattice deformation to the 3D model to provide an oblique projection of the 3D model when rendered (S3); and
means for rendering an image of the deformed 3D model from an orthographic viewpoint using the geo-position information of the 3D model (S5, S7).
